# EUROPEAN PATENT APPLICATION

(11) **EP 0 530 991 A1**
(43) Date of publication of application: **10.03.1993**
(21) Application number: 92307337.3
(22) Date of filing: 11.08.1992
(51) Int. Cl.: G06F 13/16, G06F 12/06

(54) **System and method for interleaving memory in a computer system**

(30) Priority: 05.09.1991 US 755421
(71) Applicant: NCR International, Inc., Dayton, Ohio 45479 (US)
(72) Inventor: Kass, William J., Easley, South Carolina 29642 (US); Hilley, Michael R., Belton, South Carolina 29627 (US)
(74) Representative: Robinson, Robert George

(57) **Abstract**

A computer system includes a memory board (16) which is connectable to a system bus (14) in parallel with at least one similar memory board (18). The board (16) comprises a a memory controller which interleaves the board (16) with at least one other board (18) and which is responsive to addresses on the bus (14). The board is provided with RAM (20) which may be divided into interleaved memory banks.

## Description

This invention relates to computer systems of the kind including memory boards connectable to a system bus.

Many high performance computer systems use multiple memory boards which are connected to a system bus. In some systems the boards are "hard-wired" to the system bus and in others the boards are connected to the bus through so-called "expansion slots". Expansion slots allow memory boards to be added or removed as needed. Many systems use a combination of fixed boards and removable boards. One of the chief advantages of expansion boards is that they permit the user to balance cost and performance. Expandable memory allows hardware to keep pace with ever increasing memory requirements of software.

Each memory board typically contains a memory controller and a number of dynamic random access memory (DRAM) chips for storing data. The storage capacity of a board depends upon the number and capacity of DRAM chips installed.

In executing code from system memory, application programs typically access consecutive memory locations on the same memory board. However, read and write requests to the same memory board can create bottlenecks. For example, consider a "posted" write to memory followed by a read. A posted write is one where the memory controller quickly stores a data element in a register and then releases the system bus. The memory controller then writes the data element without holding up other operations on the system bus. However, if the next operation is a request to read data from the memory board, a delay is incurred while the data element is written to DRAM. Thus, the time which would otherwise have been saved by the posted write is lost.

It is an object of the present invention to provide a computer system of the kind specified wherein the speed of memory accesses in enhanced.

Therefore, according to the present invention, there is provided a computer system, including a memory board connectable to a system bus in parallel with at least one further memory board, characterized in that said memory board includes controller means which is adapted to cause memory accesses to said memory board to be interleaved with memory accesses to said at least one further memory board.

One embodiment of the present invention will now be described by way of example, with reference to the accompanying drawings in which:-
Figure 1 is a block diagram of a portion of a computer system which may employ the present invention.
Figure 2 is a block diagram of one of the memory boards shown in Figure 1.
Figure 3 is diagram of the memory selector shown in Figure 1.

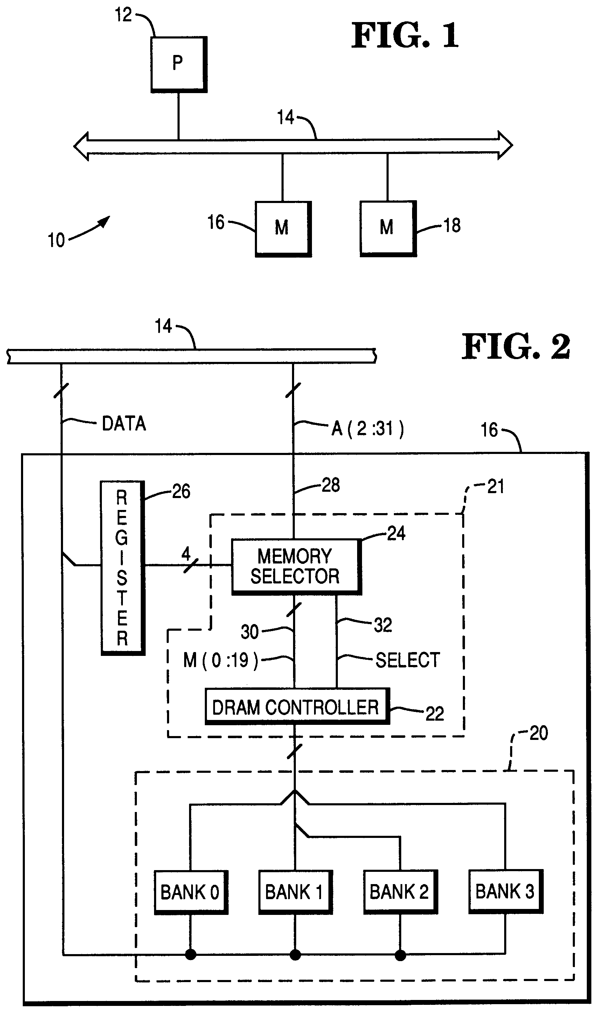

Figure 1 shows a portion of a computer system 10 which includes a microprocessor 12 connected to a system bus 14. Memory boards 16 and 18 are connected in parallel to system bus 14. Either one or both memory boards 16 and 18 may be hardwired to bus 14. However, in a preferred embodiment boards 16 and 18 are connectable to bus 14 by a plug in an expansion slot. Figure 1 shows a simplified architecture for which the present invention is adaptable. However, the invention has application to many variations of this architecture. For example, it applies to an architecture in which more than two memory boards may be connected to bus 14. It also applies to an architecture in which multiple memory boards are connected to two or more system busses.

Figure 2 shows a simplified view of memory board 16. Board 16 includes dynamic random access memory (DRAM) 20, memory controller 21 and a configuration register 26. Memory controller 21 includes DRAM controller 22 and memory selector 24. Memory selector 24 is connected to system bus 14 by lines 28 for receiving a bus address A(2:31). Memory selector 24 is also connected to register 26 for receiving configuration bits, as will be described later. Selector 24 provides a DRAM address M(0:19) on lines 30 and a SELECT signal on line 32 to DRAM controller 22. DRAM controller 22 is connected between memory selector 24 and DRAM 20. DRAM 20 is divided into four memory banks BANK0, BANK1, BANK2 and BANK3.

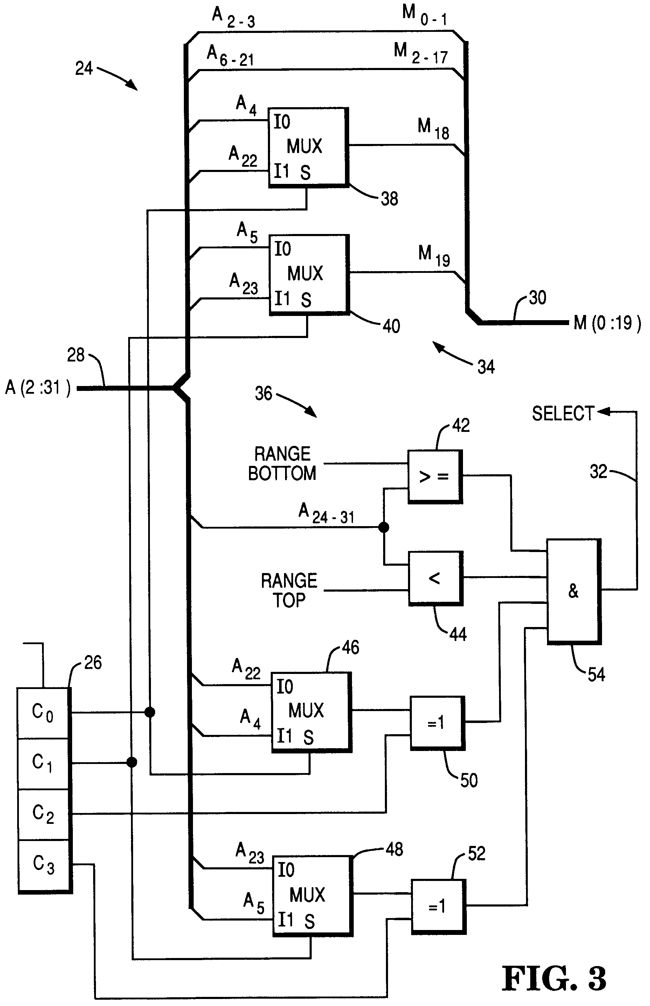

Figure 3 shows more detail of memory selector 24. Memory selector 24 includes two circuits 34 and 36. Circuit 34 converts bus address A(2:31) to DRAM address M(0:19). Circuit 34 includes a pair of multiplexers 38 and 40. Multiplexer 38 has inputs I₀ and I₁ which receive a low order bus address bit A₄ and a high order bus address bit A₂₂, respectively. The select input S of multiplexer 38 receives configuration bit C₀ from register 26. The output of multiplexer 38 is DRAM address bit M₁₈. Multiplexer 40 has inputs I₀ and I₁ which receive a low order bus address bit A₅ and a high order bus address bit A₂₃, respectively. The select input S of multiplexer 40 receives configuration bit C₁ from register 26. The output of multiplexer 40 is DRAM address bit M₁₉. For each multiplexer 38 and 40, the I0 and I1 inputs are selected by a "zero" and "one", respectively, at the select input S.

Circuit 36 generates the board select signal SELECT if bus address A(2:31) is within a predetermined range and if two bits of address A(2:31) have predetermined values, as will be described later. The range detector portion of circuit 36 includes comparators 42 and 44. Comparator 42 has inputs for receiving bus address bits A(24:31) and a value (RANGE BOTTOM) indicating the lowest range of address contained on memory board 16. Comparator 42 provides a "one" on its output if the bus address A(24:31) is greater than or equal to RANGE BOTTOM. Comparator 44 has inputs for receiving bus address bits A(24:31) and a value (RANGE TOP) reflecting the highest address contained on memory board 16. Comparator 42 provides a "one" on its output if the bus address A(24:31) is less than RANGE TOP.

Circuit 36 also includes multiplexers 46 and 48, EXOR gates 50 and 52 and AND gate 54. Multiplexer 46 has inputs I₀ and I₁ which receive a high order bus address bit A₂₂ and a low order bus address bit A₄, respectively. The select input S of multiplexer 46 receives configuration bit C₀ from register 26. The output of multiplexer 46 is connected to one input of EXOR gate 50. The other input of EXOR gate 50 receives configuration bit C₂. Multiplexer 48 has inputs I₀ and I₁ which receive a high order bus address bit A₂₃ and a low order bus address bit A₅, respectively. The select input S of multiplexer 48 receives configuration bit C₁ from register 26. The output of multiplexer 48 is connected to one input of EXOR gate 52. The other input of EXOR gate 52 receives configuration bit C₃.

The output of comparators 42 and 44 and EXOR gates 50 and 52 are inputs to AND gate 54. The output of AND gate 54 is the SELECT signal. When active, the SELECT signal enables DRAM controller 22 to respond to the memory address M(0:19).

The operation of memory selector 24 will now be described. It should first be noted that the lowest order bus address bits A(0:1) are not shown. In the described embodiment, the smallest addressable data element in DRAM 20 is a double word (four bytes). Bits A(0:1) may be used by the system processor for accessing specific bytes within a double word but are not required to access DRAM 20.

A primary function of memory selector 24 is to interleave memory board 16 with other memory boards connected to system bus 14. (In general, the boards cannot be interleaved if they contain different amounts of DRAM.) The interleaving function is fully programmable by the use of configuration register 26. During system initialization or boot-up, configuration bits C₀, C₁, C₂ and C₃ are written to register 26. Bits C₀ and C₁ allow circuit 34 to convert bus address A(2:31) to memory address M(0:19) on the basis of the number of boards to be interleaved. The following chart shows the various possibilities.

**Table 1**

| C0 | C1 | Interleaving | Bytes Addressable |
|---|---|---|---|
| 0 | 0 | none | n/a |
| 1 | 0 | 2-way | 16 |
| 1 | 1 | 4-way | 16 |

Multiplexers 38 and 40 selectively reorder address bits A₄, A₅, A₂₂ and A₂₃. If there is to be no interleaving, bits C₀ and C₁ select address bits A₄ and A₅ for DRAM address bits M₁₈ and M₁₉, respectively. At the same time, bits C₀ and C₁ are provided to multiplexers 46 and 48 where address bits A₂₂ and A₂₃, respectively, are selected to determine the SELECT signal.

If two boards are to be interleaved with 16 consecutive bytes on each board addressable, bits C₀ and C₁ select address bits A₂₂ and A₅ for DRAM address bits M₁₈ and M₁₉, respectively. At the same time, bits C₀ and C₁ are provided to multiplexers 46 and 48 where address bits A₄ and A₂₃, respectively, are selected to determine the SELECT signal.

If four boards are to be interleaved with 16 consecutive bytes on each board addressable, bits C₀ and C₁ select address bits A₂₂ and A₂₃ for DRAM address bits M₁₈ and M₁₉, respectively. At the same time, bits C₀ and C₁ are provided to multiplexers 46 and 48 where address bits A₄ and A₅, respectively, are selected to determine the SELECT signal.

Thus, programmable bits C₀ and C₁ in register 26 determine the number of boards interleaved.

Circuit 36, which generates the board select signal, is affected by several input signals. The range selector which includes comparators 42 and 44 provides output signals only when a bus address is within a predetermined range for board 16. The RANGE BOTTOM and RANGE TOP signals may be provided from a configuration register (not shown) which is loaded during system configuration. The range selector is needed even if all the memory boards in the system are interleaved because there may be other address space in the computer system that is reserved or used for other purposes. If a given address, as defined by address bits A(24:31), is between RANGE BOTTOM and RANGE TOP, the output signals from comparators 42 and 44 are both "one".

Multiplexer 46 selects either A₂₂ or A₄ depending upon the value of configuration bit C₀. Multiplexer 48 selects either A₂₃ or A₅ depending upon the value of configuration bit C₁. The input lines A₂₂ and A₄ are set up in multiplexers 38 and 46 so that when configuration bit C₀ selects A4 as the output of multiplexer 38 it also selects A₂₂ as the output multiplexer 46. Furthermore, when configuration bit C₀ selects A₂₂ as the output of multiplexer 38 it also selects A₄ as the output of multiplexer 46. Similarly, the input lines A₂₃ and A₅ are set up in multiplexers 40 and 48 so that when configuration bit C₁ selects A₅ as the output of multiplexer 40 it also selects A₂₃ as the output multiplexer 48. In addition, when configuration bit C₁ selects A₂₃ as the output of multiplexer 40 it also selects A₅ as the output of multiplexer 48.

The output of each multiplexer 46 and 48 is matched with a configuration bit C₂ and C₃, respectively. The C₂ bit primarily indicates whether board 16 is odd or even. Since the output of EXOR gate 50 is a "one" when exactly one of its inputs is a "one", the output of EXOR gate 50 will switch with a change in the output of multiplexer 46. The C₃ bit primarily indicates whether board 16 is in an upper or lower set of four memory boards. Since the output of EXOR gate 52 is a "one" when exactly one of its inputs is a "one", the output of EXOR gate 52 will switch with a change in the output of multiplexer 48.

The system described above is fully programmable according to the values stored in register 26 during system initialization. Once programmed, the system interleaves selected memory boards depending upon the values stored in register 26. Selected bits A₄, A₅, A₂₂ and A₂₃ are reordered in the sequence of memory address bits to form the address M(0:19) for accessing DRAM 20. Specifically, the lower order bits A₄ and A₅ are removed from their respective positions in A(2:23). A choice is then made between bits A₄ and A₂₂ and between bits A₅ and A₂₃, respectively, to form high order address bits M₁₈ and M₁₉. The non-selected bits of the A₄, A₂₂ and A₅, A₂₃ pairs are used to select the memory board.

It should be noted that the present system can be adapted to change the number of consecutive bytes accessible on each board. For example, if bits A₅ and A₆ are substituted for bits A₄ and A₅, the number of bytes accessible on each board changes from 16 to 32.

Another feature of the present invention may be seen by referring to Figures 1 and 2. Basically, the system memory is arranged into two tiers. The higher tier of memory is boards 16 and 18. The lower tier is memory BANKS 0-3 on each board. The interleaving of memory boards 16 and 18 has been described in detail above. However, DRAM controller 22 can also interleave memory BANKS 0-3 with addresses M(0:19). Thus, another embodiment of the present invention is a two-tiered memory system in which data is stored in the lowest tier and in which both tiers are interleaved. The interleaving of memory banks by a DRAM controller 22 is a standard function and will not be described in detail.

As an example of multi-tier interleaving, consider the case where there is 2-way interleaving between the memory boards and 4-way interleaving between memory banks. A group of memory addresses includes four addresses defined and distinguished only by bits A₂ and A₃. Consecutive groups of memory addresses are interleaved between the boards. Thus, four address in a group are allocated to one memory board, the four addresses in the next consecutive group are allocated to the other board, and so forth. The four consecutive address within each group are then interleaved between respective memory BANKS 0-3.

The number of tiers in the memory system can exceed two if desired.

It will be clear to those skilled in the art that the present invention is not limited to the specific embodiment disclosed and illustrated herein. For example, in order to accommodate increased interleaving and/or number of consecutive bytes accessible on a board, the number of multiplexers 38, 40, 46 and 48, and configuration bits in register 26 can vary. Furthermore, the memory is not limited to DRAM but can include various other read/write memory, referred to as RAM herein.

## Claims

1. A computer system, including a memory board (16) connectable to a system bus (14) in parallel with at least one further memory board (18), characterized in that said memory board (16) includes controller means (21) which is adapted to cause memory accesses to said memory board (16) to be interleaved with memory accesses to said at least one further memory board (18).

2. A computer system according to claim 1, characterized in that said controller means (21) is adapted to be programmed with the number of memory boards (16,18) interleaved.

3. A computer system according to claim 1 or claim 2, characterized in that said controller means (21) includes selection means (36) adapted to generate a board select signal if a bus address supplied on said bus (14) lies within a predetermined range and if at least one selected bit from said bus address has a predetermined value.

4. A computer system according to any one of the preceding claims, characterized in that said controller means (21) includes address conversion means (38,40) adapted to convert a bus address supplied on said bus (14) to a memory access address adapted to access data on said memory board (16) on the basis of the number of memory boards (16,18) interleaved.

5. A computer system according to claim 4, characterized in that said address conversion means (38,40) is adapted to selectively reorder bits of said bus address received from said bus (14) to provide said memory access address.

6. A computer system according to claim 4 or claim 5, characterized in that said memory board (16) includes a configuration register (26) and in that said address conversion means includes a plurality of multiplexers (38,40) each receiving a low order address bit and a high order address bit from said bus (14) and being controllable in accordance with a respective configuration bit stored in said configuration register (26) to supply said low or high order address bit on a multiplexer output.

7. A computer system according to any one of claims 4 to 6, characterized in that said controller means (21) includes random access memory (RAM) control means (22) adapted to control RAM memory means (20) provided on said memory board (16) and arranged in a plurality of memory banks, and in that said RAM control means (21) is adapted to interleave memory accesses to said RAM memory means (20) among said memory banks.
